Europäisches Patentamt

(19) European Patent Office

Office européen des brevets

(11) Veröffentlichungsnummer: **0 289 815**
**B1**

(12) **EUROPÄISCHE PATENTSCHRIFT**

(45) Veröffentlichungstag der Patentschrift:
08.08.90

(51) Int. Cl.⁵: **F16L 33/26**

(21) Anmeldenummer: 88105764.0

(22) Anmeldetag: **12.04.88**

(54) **Endverbindung für einen Agraffschlauch.**

(30) Priorität: **30.04.87 DE 3714472**

(43) Veröffentlichungstag der Anmeldung:
**09.11.88 Patentblatt 88/45**

(45) Bekanntmachung des Hinweises auf die Patenterteilung:
**08.08.90 Patentblatt 90/32**

(84) Benannte Vertragsstaaten:
**BE CH DE FR GB LI NL**

(56) Entgegenhaltungen:
BE-A- 864 143
DE-A- 2 057 668
DE-A- 2 734 983

(73) Patentinhaber: **Witzenmann GmbH**
**Metallschlauch-Fabrik Pforzheim, Östliche**
**Karl-Friedrich-Strasse 134, D-7530 Pforzheim(DE)**

(72) Erfinder: **Förster, Walter, Heynlinstrasse 23,**
**D-7535 Königsbach-Stein 2(DE)**

(74) Vertreter: **Lemcke, Rupert, Dipl.-Ing. et al,**
**Patentanwälte Dipl.-Ing. R. Lemcke Dr.-Ing. H.J.**
**Brommer Bismarckstrasse 16 Postfach 4026,**
**D-7500 Karlsruhe 1(DE)**

## Beschreibung

Die Erfindung betrifft Endverbindungen an einem durch schraubengangförmiges Wickeln eines im wesentlichen S-förmig vorprofilierten Metallbandes unter Verfalzen benachbarter Bandkanten hergestellten Agraffschlauch, wobei das jeweilige Schlauchende zwischen zwei Verbindungsteilen eingepreßt ist, von denen eines eine zylindrische Hülse, das andere einen Anschlußstutzen bildendes, zylindrisches Rohrstück ist (DE-A 2 734 983).

Bei derartigen Agraffschläuchen geschieht die Verfalzung benachbarter Kanten dadurch, daß das Band im wesentlichen S-förmig profiliert wird, wobei in der Mitte des Profils ein Steg entsteht, der später im wesentlichen radial zum Schlauch liegt, und wobei die S-Haken benachbarter Bandkanten in hintergreifenden Eingriff gebracht werden, so daß der Falz in Radialrichtung des Schlauches gesehen aus vier Lagen des Bandmaterials und einem gewissen Spiel besteht. Dies betrifft sowohl kreisrundgewickelte als auch mehrkantig gewickelte Agraffschläuche, auf die sich die nachfolgend beschriebene Erfindung gleichermaßen bezieht.

Metall-Wickelschläuche in Form von Agraffschläuchen finden für die verschiedensten Zwecke Verwendung, so z. B. als Förderschläuche, Absaugschläuche oder insbesondere als Auspuffschläuche von Verbrennungsmotoren, wo sie in der Regel als flexibles Element innerhalb der Abgasleitung eingesetzt sind, um Winkelbewegungen, Axialbewegungen, Lateralbewegungen, allseitig gleich gut sowie Torsionbewegungen im bestimmtem Umfang aufzunehmen, damit Schwingungen und Relativbewegungen zwischen nicht starr gelagertem Motor einerseits und Auspuffleitung andererseits ausgeglichen werden.

Umwelt- und Lärmschutzauflagen stellen inzwischen immer strengere Anforderungen an die Dichtigkeit der Agraffschläuche und der mit diesen gebildeten Leitungselemente, wodurch auch deren Endverbindungen mit in diese Problematik einbezogen sind. Bei den bekannten Endverbindungen der eingangs genannten Art, bei denen in der Regel die Verbindungsteile eine zur Schlauchachse parallele Wandung aufweisen, gelingt es zwar, verhältnismäßig feste Anschlußverbindungen zu schaffen, es hat sich jedoch herausgestellt, daß deren Dichtheit schlechter als die des übrigen Metallschlauches ist, wodurch Bemühungen, den Metallschlauch bzw. Agraffschlauch bei ausreichender Beweglichkeit doch möglichst dicht zu gestalten, teilweise wieder zunichte gemacht werden. Dies hat unter anderem seinen Grund darin, daß der aus Stabilitätsgründen oftmals mehrkantig gewickelte Metallschlauch durch kreisrunde Teile der Endverbindung gefaßt ist, wodurch sich hier schon aus geometrischen Gründen ein vollständiger Formschluß nicht erreichen läßt.

Hinzu kommt, daß sich in der Übergangszone zwischen runden Anschlußteilen und dem kantigen Schlauchquerschnitt im Bereich vor den Anschlußteilen die dortigen Windungen infolge betriebsbedingter häufiger Bewegungen und Vibrationen voneinander lösen und der Schlauch folglich hier vollkommen undicht wird. Auch erfolgt dann die Bewegung des Schlauches im wesentlichen nur noch im Bereich dieser voneinander gelösten Windungen, was bei starken Schwingungen und der damit einhergehenden schlagartigen Beanspruchung zu einem Bruch des Schlauches führen kann.

Aufgabe der Erfindung ist es, eine Möglichkeit anzugeben, wie sich Endverbindungen der eingangs genannten Art in dauerhafter Weise wesentlich dichter und standfester gegenüber allen auftretenden Belastungen wie sie vorstehend beschrieben wurden, gestalten lassen bzw. wie das spätere Auftreten von Undichtigkeiten verhindert wird, wobei eine gleichmäßigere Auslastung bzw. Belastung des Schlauches insbesondere im Bereich der Endverbindungen sowie gleich gute Ergebnisse unabhängig von der Frage erzielt werden sollen, ob der Schlauchkreis rund oder mehrkantig gewickelt ist.

Diese Aufgabe ist erfindungsgemäß dadurch gelöst, daß in bezug auf die Fertigungsrichtung des Schlauches am Schlauchanfang unter Aufweitung des Schlauchinnendurchmessers bei Beibehaltung des Schlauchaußendurchmessers und am Schlauchende unter Reduzierung des Schlauchaußendurchmessers bei Beibehaltung des Schlauchinnendurchmessers die Verbindungsteile mit dem Schlauch verpreßt sind und daß die Wanddicke der Schlauchenden auf den Betrag der vierfachen Dicke des Metallbandes zusammengedrückt ist.

Diese erfindungsgemäße Gestaltung der Schlauchverbindungen beruht auf der Erkenntnis, daß in Vorschubrichtung der Schlauchfertigung gesehen am Schlauchanfang sich die Innenwindung bei Beanspruchung etc. nach innen von der nächstfolgenden Windung lösen will, während am Schlauchende das gleiche für die den Abschluß bildende Außenwindung gilt, wobei hier noch eine gewisse, nach dem Wickeln des Schlauches im Bandmaterial verbliebene Rückfederungsrate eine Rolle spielt. Würde man dieser Tendenz bei dem mit der Herstellung der Endverbindungen einhergehenden Verpressen folgen, so ergäbe sich ein Lösen der einzelnen Schlauchwindungen voneinander und eine Undichtigkeit des Schlauches.

Durch die erfindungsgemäße Gestaltung wird nun durch eine gewisse Überdehnung dieser Tendenz des Aufspringens der Schlauchwindungen am Schlauchanfang nach innen und am Schlauchende nach außen entgegengewirkt. Auf diese Weise ist, wie sich gezeigt hat, eine hochdichte und in sich äußerst feste Endverbindung geschaffen, die auch nach längerem Betrieb keine Tendenz zum Auftreten einer Lockerung aufweist.

Die vorstehende Gestaltung gilt zunächst einmal für alle Schlauchquerschnitte. Soweit jedoch mehrkantig gewickelte Schläuche mit Endverbindungen ausgestattet werden, ist es in weiterer Ausbildung des Erfindungsgedankens zweckmäßig, daß dann die Verbindungsteile entsprechend mehrkantig ausgebildet sind, was ggf. ausgehend von runden Verbindungsteilen im Zuge des Preßvorganges verwirklicht werden kann, in dem entsprechend mehrteilig ausgebildete, radial wirksam werdende Preßwerkzeuge Verwendung finden.

Ferner ist es nach der Erfindung vorteilhaft, daß wenigstens eines der Verbindungsteile durch warzenförmige Ausprägungen mit dem Schlauch in formschlüssiger Verbindung ist, wobei wenigstens drei oder vier gleichmäßig über den Umfang verteilte Ausprägungen zweckmäßig sind. Derartige Ausprägungen schaffen in Axial- und Umfangsrichtung eine hohe Festigkeit auch bezüglich der gegenseitigen Beweglichkeit benachbarter Schlauchwindungen innerhalb der Endverbindungen, so daß sich auch nach langer Betriebszeit infolge erheblicher Schwingungsbelastung keine gegenseitige Verstellung benachbarter Schlauchwindungen und entsprechendes Lösen innerhalb der Endverbindungen ergeben kann.

Bekanntermaßen bildet ein Agraffschlauch je nach Ausbildung der Bandprofilierung auf der Innen- und/oder Außenseite zwischen den benachbarten Windungen eine schraubengangförmig umlaufende Nut, die bei der Dichtigkeitsfrage eine erhebliche Rolle spielt, indem über den Querschnitt dieser Nut leckgehende Mengen des im Schlauch geführten Mediums im Bereich der Endverbindungen insbesondere um die Stirnkante des Schlauches herum nach außen gelangen können. Um dem zu begegnen, kann im Verein mit den vorstehend erwähnten Ausprägungen vorgesehen sein, daß wenigstens eine der Ausprägungen sich in Eingriff mit der auf der Innen- und/oder Außenseite des Schlauches zwischen benachbarten Metallbandwindungen schraubengangförmig umlaufenden Nut befindet. Werden, wie vorstehend erwähnt, mehrere Ausprägungen gleichmäßig über den Umfang verteilt, so ergibt sich diese Folge ohne große Bemühungen von selbst, wenn man nur die Zahl der Ausprägungen groß genug wählt. Auf diese Weise wird dann an wenigstens einer Stelle der Verlauf der Nut unterbrochen bzw. gesperrt.

Die vorstehend geschilderte formschlüssige Verbindung mit Hilfe warzenförmiger Ausprägungen ist in vielen Fällen an sich zur Schaffung der innerhalb der Endverbindungen notwendigen Stabilität ausreichend. Um jedoch diese Stabilität und auch die Dichtigkeit weiter zu erhöhen, können die Verbindungsteile auch zusätzlich neben dem zugeordneten Schlauchende miteinander verschweißt sein, wobei je nach den Anforderungen des Einzelfalles hier einzelne Schweißstellen genügen können oder aber eine dicht umlaufende Schweißnaht vorgesehen werden kann.

Bezüglich des neben den Verbindungsteilen der Endverbindungen liegenden Schlauchbereiches kann als Weiterbildung der Erfindung vorgesehen sein, daß sich an die Verbindungsteile ein konischer Übergangsbereich für die Wanddicke bzw. die Profilhöhe des Schlauches zwischen Fertigungsmaß und zusammengedrücktem Maß anschließt, wobei es sich als zweckmäßig erwiesen hat, daß der Übergangsbereich wenigstens drei Schlauchwindungen umfaßt, je nach Schlauchlänge aber eine größere Windungszahl erstrebenswert sein kann.

Auf diese Weise ist sichergestellt, daß sich die erwähnte, durch die Herstellung der Endverbindungen verursachte Maßdifferenz nicht unmittelbar neben den Verbindungs teilen auf in der Regel nur eine Schlauchwindung auswirkt und bei dieser praktisch zu einem teilweisen Aufbrechen des gegenseitigen Formschlusses benachbarter Windungen führt, so daß dort nicht nur der Schlauch praktisch vollkommen undicht wird, sondern auch bezüglich von ihm aufzunehmender Belastungen geradezu mit einer Sollbruchstelle ausgestattet ist. Vielmehr wird die erwähnte Maßdifferenz gleichmäßig über eine größere Zahl von Schlauchwindungen verteilt, dergestalt, daß eine Beeinträchtigung der Dichtigkeit nicht mehr gegeben ist und andererseits ein allmählicher Übergang von dem vollkommen unbeweglichen Verhalten des Schlauches innerhalb der Endverbindungen auf die dem Schlauch von Hause aus innewohnende Beweglichkeit geschaffen ist.

In diesem Zusammenhang ist auch darauf hinzuweisen, daß hier eine einfache Möglichkeit gegeben ist, bei mehrkantigen Schläuchen durch die Beschaffung der Konizität einen allmählichen Übergang auf einen kreisrunden Querschnitt für den Bereich innerhalb der Endverbindungen herzustellen.

Weitere wesentliche Merkmale und Einzelheiten der Erfindung ergeben sich aus der nachfolgenden Beschreibung einer Ausführungsform, die auf der Zeichnung dargestellt ist. In der Zeichnung zeigen

Figur 1 die Seitenansicht eines mehrkantig gewickelten Agraffschlauches mit Endverbindungsteilen, teilweise geschnitten;
Figur 2 die Seitenansicht A-A gemäß Figur 1;
Figur 3 die vergrößerte, auszugsweise Schnittansicht einer Endverbindung am in Fertigungsrichtung des Schlauches hinten liegenden Schlauchende und
Figur 4 die ausschnittweise, vergrößerte Schnittdarstellung einer Endverbindung am bezogen auf die Fertigungsrichtung vorn liegenden Schlauchanfang.

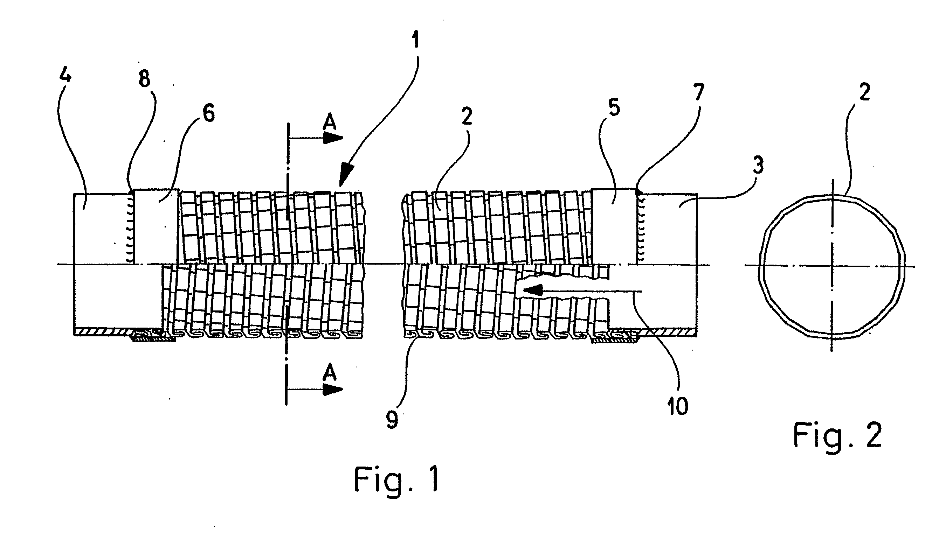

Die Figuren 1 und 2 zeigen einen durch Wickeln eines Bandes hergestellten Agraffschlauch 1, der im Querschnitt mehrkantig ausgebildet ist. Der Schlauch ist mit seinen Enden auf Rohrstücke 3, 4 aufgesetzt und dort von zylindrischen Ringen 5, 6 umgeben, wobei dann der Schlauch 1, die Rohrstücke 3, 4 und die Ringe 5, 6 je duch eine Schweißnaht 7, 8 dicht miteinander verbunden sind.

Der Agraffschlauch 1 ist durch Wickeln eines Bandes in Richtung des Pfeiles 10 entstanden, wobei benachbarte Bandkanten miteinander verfalzt sind und zwischen den nebeneinander liegenden Falzen im wesentlichen sich radial erstreckende Stege 9 verbleiben.

In gleicher Weise kann selbstverständlich auch ein im Querschnitt kreisrunder Agraffschlauch hergestellt und mit Anschlußteilen versehen sein. Was die Rohrstücke 3, 4 betrifft , so kann deren Stelle auch mit einem entsprechenden, rohrförmigen Fortsatz ausgestatteter Flansch betreten, der beispielsweise durch Schraubverbindungen an weiterführende Bauteile befestigt sein kann. Ebenso ist eine Umkehrung zwischen den Rohrstücken 3, 4 einerseits und den Ringen 5, 6 andererseits denkbar, in dem beispielsweise das Rohrstück 3 außerhalb des Schlauches 1 und der Ring 5 innerhalb des Schlauches angeordnet sind.

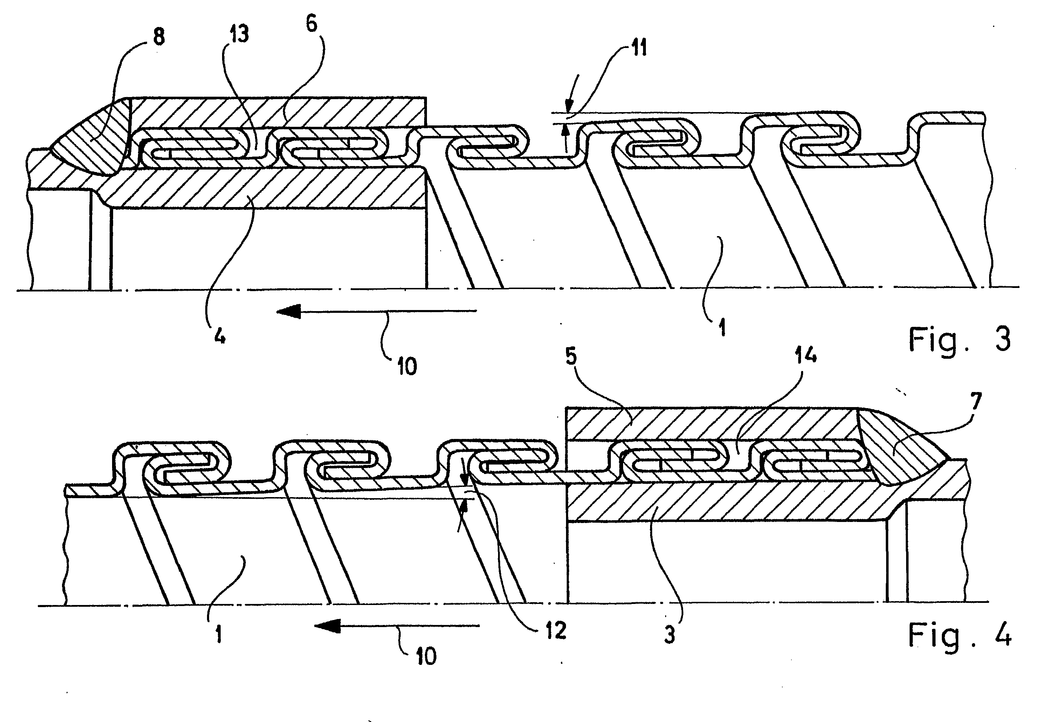

Die Gestaltung der bezogen auf Figur 1 linken, also in Wicklungsrichtung 10 des Schlauches an dessen Ende angeordneten Endverbindung zeigt Figur 3 in vergrößerter Schnittdarstellung. Daraus ist ersichtlich, daß die fertigungsbedingte Wanddicke des Schlauches mittels einer Durchmesserverringerung des Ringes 6 von außen reduziert und dadurch der Schlauch zwischen Rohrstück 4 und Ring 6 verpreßt ist, so daß der Abstand zwischen Rohrstück 4 und Ring 6 am Ende nur noch der vierfachen Wandstärke des den Schlauch 1 bildenden Bandmaterials beträgt. Am Schluß sind dann Rohrstück 4 und Ring 6 endständig mit der umlaufenden Schweißnaht 8 versehen.

Damit sich die Reduzierung der Wandstärke des Agraffschlauches von dem aus Figur 3 rechts ersichtlichen, fertigungsbedingten Maß auf den Abstand zwischen Rohrstück 4 und Ring 6 nicht neben den beiden letztgenannten Teilen auf nur eine Schlauchwindung auswirkt, ist außerdem der Schlauch im Bereich rechts neben dem von der Endverbindung eingenommenen Bereich konisch verformt, so, daß sich sein Außendurchmesser in Richtung auf die Endverbindung allmählich verjüngt unter einem dadurch gebildeten Winkel 11, wobei im vorliegenden Falle sich der konische Bereich über drei nebeneinander angeordnete Schlauchwindungen erstreckt.

Bei dem in Figur 4 vergleichbar gezeigten, bezogen auf Figur 1 rechten Schlauchende ist entsprechend der Schlauch entlang einem Winkel 12 konisch von innen aufgeweitet. Außerdem ist das Rohrstück 3 unter Aufweitung des Schlauches von innen in diesen eingesetzt und dadurch der Schlauch zwischen Ring 5 und Rohrstück 3 verpreßt. Schließlich sind Rohrstück 3 und Ring 5 durch eine umlaufende Schweißnaht 7 dicht miteinander verbunden.

Zur Erhöhung der Festigkeit der Endverbindungen und anstelle der Schweißnähte 7, 8 können die Rohrstücke 3, 4 und/oder die Ringe 5, 6 mit auf den Schlauch zu gerichteten, warzenförmigen Einbuchtungen versehen werden, über die sie mit dem Schlauch 1 in Axialrichtung und in Umfangsrichtung in formschlüssige Verbindung treten bei mindestens 3 auf einer Umfangslinie liegenden Einbuchtungen ist dann z. B. sichergestellt, daß wenigstens eine der warzenförmigen Ausbuchtungen in die umlaufende Nut 13 bzw. 14 ragt und diese versperrt, die der Schlauch zwischen benachbarten Schlauchwindungen bildet.

Wie aus den Figuren 3 und 4 ersichtlich, ist außerdem der Schlauch für den Bereich der Endverbindungen axial auf das Mindestmaß zusammengeschoben. Dies trägt einmal weiterhin zur Dichtigkeit der Endverbindungen bei.

Darüber hinaus ergeben sich kürzere freie Flächen, womit der Gefahr eines Ausbeulens des Profils entgegengewirkt ist. Außerdem kann das Schlauchmaterial bei der Herstellung einer endständigen Schweißverbindung besser von dem Schweißmaterial erfaßt werden. Ferner ergibt sich für extreme Belastungen äußerstenfalls eine zusätzliche axiale Ausdehnungsmöglichkeit für den Schlauch, die aber erst kurz vor Erreichen der Bruchgrenze wirksam wird und somit einen solchen Bruch im äußersten Falle gerade noch verhindert. Schließlich lassen sich die Werkzeuge für die Herstellung der Endverbindungen entsprechend kürzer und damit billiger gestalten.

## Patentansprüche

1. Endverbindungen an einem durch schraubengangförmiges Wickeln eines im wesentlichen S-förmig vorprofilierten Metallbandes unter Verfalzen benachbarter Bandkanten hergestellten Agraffschlauch, wobei das jeweilige Schlauchende zwischen zwei Verbindungsteilen eingepreßt ist, von denen eines eine zylindrische Hülse und das andere ein einen Anschlußstutzen bildendes zylindrisches Rohrstück ist, dadurch gekennzeichnet, daß in bezug auf die Fertigungsrichtung (10) des Schlauches (1) am Schlauchanfang unter Ausweitung des Schlauchinnendurchmessers bei Beibehaltung des Schlauchaußendurchmessers und am Schlauchende unter Reduzierung des Schlauchaußendurchmessers bei Beibehaltung des Schlauchinnendurchmessers die Verbindungsteile (3, 5; 4, 6) mit dem Schlauch verpreßt sind und daß die Wanddicke der Schlauchenden auf den Betrag der vierfachen Dicke des Metallbandes zusammengedrückt ist.

2. Endverbindungen nach Anspruch 1, dadurch gekennzeichnet, daß bei mehrkantig gewickeltem Schlauch die Verbindungsteile (3, 5; 4, 6) entsprechend mehrkantig ausgebildet sind.

3. Endverbindungen nach Anspruch 1, dadurch gekennzeichnet, daß wenigstens eines der Verbindungsteile (3, 5; 4, 6) durch warzenförmige Ausprägungen mit dem Schlauch (1) in formschlüssiger Verbindung ist.

4. Endverbindungen nach Anspruch 3, dadurch gekennzeichnet, daß wenigstens eine der Ausprägungen sich in Eingriff mit der auf der Innen- und/oder Außenseite des Schlauches (1) zwischen benachbarten Metallbandwindungen schraubengangförmig umlaufende Nut (13, 14) befindet.

5. Endverbindungen nach einem der vorhergehenden Ansprüche, dadurch gekennzeichnet, daß die Verbindungsteile (3, 5; 4, 6) neben dem zugeordneten Schlauchende miteinander verschweißt (7, 8) sind.

6. Endverbindungen nach einem der vorhergehenden Ansprüche, dadurch gekennzeichnet, daß sich an die Verbindungsteile (3, 5; 4, 6) der Endverbindung ein konischer Übergangsbereich für die Wanddicke des Schlauches (1) zwischen Fertigungsmaß und zusammengedrücktem Maß anschließt.

7. Endverbindungen nach Anspruch 6, dadurch gekennzeichnet, daß der Übergangsbereich wenigstens drei Schlauchwindungen umfaßt.

## Claims

1. Terminal connections on a hose composed of clip elements, produced by helical winding of a metal strip preprofiled in substantially S form with creasing of adjacent strip edges, where the hose end in each case is pressed-in between two connection parts one of which is a cylindrical sleeve and the other is a cylindrical tube piece forming a connector piece, characterised in that in relation to the direction (10) of production of the hose (1) the connection parts (3, 5; 4, 6) are pressed with the hose at the hose commencement with expansion of the hose internal diameter while retaining the hose external diameter and at the hose end with reduction of the hose external diameter while retaining the hose internal diameter, and in that the wall thickness of the hose ends is compressed to the amount of four times the thickness of the metal strip.

2. Terminal connections according to claim 1, characterised in that in the case of a polygonally wound hose the connection parts (3, 5; 4, 6) are of correspondingly polygonal formation.

3. Terminal connections according to claim 1, characterised in that at least one of the connection parts (3, 5; 4, 6) is in shape-locking connection with the hose (1) by means of outwardly swaged parts of nipple form.

4. Terminal connections according to claim 3, characterised in that at least one of the outwardly swaged parts is in engagement with the groove (13, 14) which extends in helical form around on the inner and/or outer side of the hose (1) between adjacent metal strip turns.

5. Terminal connections according to one of the preceding claims, characterised in that the connection parts (3, 5; 4, 6) are welded (7, 8) with one another beside the associated hose end.

6. Terminal connections according to one of the preceding claims, characterised in that the connection parts (3, 5; 4, 6) of the terminal connection are adjoined by a conical transition zone for the wall thickness of the hose (1) between dimensions as manufactured and dimensions after compression.

7. Terminal connections according to claim 6, characterised in that the transition zone comprises at least three hose windings.

**Revendications**

1. Raccords d'extrémité installés sur un tuyau souple à agrafes formé par un enroulement hélicoïdal d'une bande métallique préalablement profilée en forme de S, moyennant le repliage de bords voisins de la bande, l'extrémité respective du tuyau étant emmanchée à force entre deux éléments de raccordement, dont l'un est une douille cylindrique et dont l'autre est un élément tubulaire cylindrique constituant une tubulure de raccordement, caractérisés par le fait que les éléments de raccordement (3, 5; 4, 6) sont comprimés avec le tuyau (1) au début de ce dernier, lorsqu'on regarde dans la direction de fabrication (10), moyennant un élargissement du diamètre intérieur du tuyau et le maintien du diamètre extérieur de ce dernier, et au niveau de l'extrémité du tuyau, moyennant une réduction du diamètre extérieur de ce dernier et le maintien de son diamètre intérieur, et que l'épaisseur de paroi des extrémités du tuyau est réduite par compression de manière à posséder une valeur égale au quadruple de l'épaisseur de la bande métallique.

2. Raccords d'extrémité selon la revendication 1, caractérisés en ce que, dans le cas d'un tuyau enroulé avec un contour polygonal, les éléments de raccordement (3, 5; 4, 6) sont réalisés de façon correspondante avec un contour polygonal.

3. Raccords d'extrémité selon la revendication 1, caractérisés en ce qu'au moins l'un des éléments de raccordement (3, 5; 4, 6) est relié au tuyau (1) au moyen de parties conformées en forme de boutons, selon une liaison par formes complémentaires.

4. Raccords d'extrémité selon la revendication 3, caractérisés en ce qu'au moins l'une des parties conformées s'engage dans la gorge circonférentielle (13, 14), qui s'étend avec une forme hélicoïdale au niveau de la face intérieure et/ou de la face extérieure du tuyau (1) entre des spires voisines de la bande métallique.

5. Raccords d'extrémité selon l'une des revendications précédentes, caractérisés en ce que les éléments de raccordement (3, 5; 4, 6) sont soudés entre eux (7, 8) à côté de l'extrémité associée du tuyau.

6. Raccords d'extrémité selon l'une des revendications précédentes, caractérisés en ce qu'une zone conique de transition pour l'épaisseur de paroi du tuyau (1), qui réalise la transition entre une cote de fabrication et la cote obtenue à l'état comprimé, se raccorde aux éléments de raccordement (3, 5; 4, 6).

7. Raccords d'extrémité selon la revendication 6, caractérisés en ce que la zone de transition s'étend au moins sur trois spires de la bande.

Fig. 1

Fig. 2

EP 0 289 815 B1

Fig. 3

Fig. 4

EP 0 289 815 B1